# EUROPEAN PATENT SPECIFICATION

(11) **EP 3 810 529 B1**
(45) Date of publication and mention of the grant of the patent: **13.09.2023**
(21) Application number: 19742934.3
(22) Date of filing: 19.06.2019
(51) Int. Cl.: B65G 1/133, B65G 49/06, B65G 1/14

(54) **AUTOMATED SYSTEM AND METHOD FOR THE STORAGE AND MOVEMENT OF HEAVY MATERIAL**
AUTOMATISIERTES SYSTEM UND VERFAHREN ZUM LAGERN UND BEWEGEN VON SCHWEREN MATERIALIEN
SYSTÈME ET PROCÉDÉ AUTOMATISÉS POUR LE STOCKAGE ET LE DÉPLACEMENT D'UN MATÉRIAU LOURD

(30) Priority: 19.06.2018 IT 201800006467
(43) Date of publication of application: 28.04.2021
(73) Proprietor: OFFICINE MISTRELLO S.R.L., 35040 Ponso (PD) (IT)
(72) Inventor: MISTRELLO, Marco, 35040 Ponso (PD) (IT); ALDEGHERI, Matteo, 35040 Ponso (PD) (IT); BALDO, Nicola, 35040 Ponso (PD) (IT)
(74) Representative: Brunacci, Marco
(86) International application number: PCT/IB2019/055147
(87) International publication number: WO 2019/244061

(56) References cited:
- EP-A1- 2 070 848
- EP-A2- 1 153 856
- WO-A1-2011/101733
- DE-A1- 4 428 897
- US-B1- 6 510 950

## Description

### Technical Field

The present invention relates to an automated system and method for the storage and movement of heavy material, more in particular, sheet-shaped or profiled material.

### Background Art

In the remainder of the present description and in the following claims, "heavy material" means material that is preferably sheet-shaped or profiled and which is typically not transportable by hand because of its weight; in particular, it means material with a weight of at least more than one hundred kilos. The heavy material can also be moved by means of a support on pallets as described in detail in the following description.

The storage and movement of heavy material is generally carried out in equipped warehouses or industrial sheds where there is a material entry area, one or more movement and storage areas and a material unloading area.

The storage area usually has a number of classifiers equipped with shelves or frames which can extend to occupy the space available mainly horizontally or vertically depending on the type and orientation of the material to be stored. WO 2017/144296, for example, describes a vertically extending storage device adapted to receive a plurality of goods on a horizontal conveyor belt and equipped with lifting elements connected to a traction unit to move and store the goods vertically. By appropriately selecting the lifting elements, the vertical dimensions of the overlapping storage positions are individually adaptable to the size of the goods to be stored.

If the quantity of material to be stored and moved is high, solutions have been developed wherein the movement device moves between several shelves to pick up and/or deposit the material on them. Diversely, in the case of solutions wherein shelves extend mainly horizontally, it is possible to handle and/or pick up the material on the shelves by means of aerial movement equipment, e.g., installed on overhead travelling cranes, or by means of movement devices sliding on tracks installed on the ground.

EP 2 070 848 of the Applicant, for example, describes an overhead selector for picking up large flat glass sheets wherein the frame supporting the gripping means is moved from above and can move between the classifiers to pick up and handle the sheets within the classifier. The overhead selector can thus pick up sheets from multiple classifiers arranged side by side along the entire length of the overhead crane lintel. However, such devices have the limit of being very expensive and with extremely long installation and commissioning times.

A less-expensive solution is, for example, that described in IT 1 326 020, again by the Applicant, wherein the movement and picking up is carried out by a handling device, or otherwise called a "loading/unloading" machine, provided with a carriage sliding on tracks installed on the ground at the side of a classifier. The carriage is fitted with an elongated bar that can be translated so as to protrude out of the sliding carriage to fit inside the classifier. For this purpose, the classifiers have a number of frames for the horizontal housing of the sheets and in which each frame can slide along guides so as to create a space between two frames and allow the translatable elongated bar to enter this space to pick up or deposit a sheet. In practice, the loader/unloader allows a sheet to be picked up vertically and then removed from the classifier and oriented horizontally. A drawback of this solution is that the loader/unloader can pick up and deposit sheets at most on two classifiers installed on the side of it. On the other hand, in the presence of more than one row of classifiers, the installation of additional movement devices is mandatory. In point of fact, every two rows of classifiers the presence is required of at least one loader/unloader to pick up or deposit the sheets.

US 6 510 950 B1 discloses an automated system according to the preamble of claim 1 and an automated method according to the preamble of claim 7.

The Applicant has observed that with the same space available, the storage capacity through an automated system could be increased while maintaining low construction and installation costs.

The Applicant has also observed that in warehouses where the handling of the sheets is carried out mainly by means of overhead equipment, the sheets present in other areas of the warehouse, for example in the cutting areas, cannot be moved when the overhead equipment is used, thus creating production stops with consequent economic losses.

The Applicant has become aware that by enabling operation in conjunction of the adjacent classifiers, more than two rows of classifiers per handling device could be made available, also permitting the displacement of sheets and/or packs of sheets within the warehouse even if the handling equipment is engaged in other operations. This way, it is possible to have a sheet holder frame (or sheet pack holder) that can be moved independently between several classifiers within a warehouse.

The Applicant has therefore developed an automated system for the storage and movement of heavy materials wherein a plurality of classifiers placed side by side operate in conjunction to make a frame shift between such classifiers in a simple, fast and effective way. This way, it is therefore possible to install a single handling device operating in conjunction with a plurality of classifiers placed side by side.

### Description of the Invention

The present invention therefore relates, in a first aspect thereof, to an automated system for the storage and movement of heavy materials in accordance with claim 1.

In a further aspect thereof, the present invention relates to an automated method for the storage and movement of heavy materials in accordance with claim 7.

### Brief Description of the Drawings

Further characteristics and the advantages of the automated system for the storage and movement of heavy materials according to the present invention will emerge from the following description of its preferred embodiments, given by way of an indicative and non-limiting example, with reference to the attached illustrations, wherein:
- Figure 1 shows a view from above of the automated system for the storage and movement of heavy materials according to a first embodiment of the present invention comprising at least one frame movable in translation between a fixed classifier and an openable classifier,
- Figures 2 and 3 show views from above of the automated system of Figure 1 in which the frame is translated from a fixed classifier to an openable classifier,
- Figures 4 and 5 show side views of the fixed classifier of Figure 1,
- Figure 6 shows a side view of the movable frame of Figure 1,
- Figure 7 shows a side view of the openable classifier of Figure 1,
- Figure 8 shows a side view of a frame of an openable classifier of Figure 7,
- Figures 9a and 9b show a side view and a view from above, respectively, of a selector carriage sliding below the fixed classifier of Figure 1,
- Figure 10 shows a side view of a drive assembly mounted on the selector carriage of Figure 9a, 9b,
- Figure 11 shows a perspective view of the drive assembly of Figure 10,
- Figures 12a and 12b show a side view and a view from above, respectively, of a selector carriage sliding below an openable classifier, in particular the openable classifier of Figure 1,
- Figure 13a shows a front view of a drive assembly mounted on the selector carriage of Figure 12a, 12b,
- Figure 13b shows a front view of the transverse liftable guide mounted on the selector carriage of Figure 12a, 12b,
- Figures 14a and 14b show front views of a frame of the fixed classifier of Figure 1 in which the drive assembly is in a lowered and raised configuration, respectively,
- Figures 15a and 15b show front views of a frame of the openable classifier of Figure 1 in which the drive assembly is in a lowered and raised configuration, respectively,
- Figure 16 shows a view from above of the automated system for the storage and movement of heavy materials in accordance with a second embodiment of the present invention in which a frame is movable in translation between a fixed classifier, two openable classifier and a shuttle
- Figures 17a and 17b show front views of the shuttle frame of Figure 16 in which the drive assembly is in a lowered and raised configuration, respectively,
- Figures 18a, 18b, 19a and 19b show front and side views of some variants of the frame of the classifiers in accordance with the present invention.

### Embodiments of the Invention

With particular reference to the enclosed figures, reference numeral 1 globally indicates an automated system for the storage and movement of heavy materials 2.

As described in detail in the rest of the present description, storage is preferably made by means of vertical frame classifiers, while movement is carried out by means of so-called "shuttles". In this regard, the classifiers can be of the "openable" type, i.e. with the frames that can be moved away from an adjacent frame in order to create a space between them, or of the "fixed" type wherein the frames are always locked in the same position without the possibility of longitudinal movement.

The term "shuttle" is used to indicate a device that can be moved longitudinally alongside one or more classifiers and can receive a frame supporting a glass sheet or a pack of sheets from such classifiers. For this purpose, a shuttle is usually provided with guiding means to receive the single frame and movement means to transport the frame to other classifiers or to unloading areas so that the sheets can be picked up, for example, by loading/unloading machines or overhead selectors.

As mentioned above, the heavy material can be sheet-shaped or profiled material typically not transportable by hand due to its weight. Heavy sheet-shaped material may comprise large or medium-sized sheet material with a surface area of at least 4 m². In the examples shown, sheets are preferably flat sheets of glass.

However, the sheets may also be made of other materials such as marble, wood, chipboard, PVC, metal or polymeric material, ceramic material or agglomerates. Preferably, the sheets of glass are intended for the production of medium or large sizes, for example with dimensions of 3210 mm x 6000 mm or 3210 mm x 2550 mm, respectively. In still further versions, the sheets can comprise minimum dimensions typically of 2000 mm x 1000 mm and maximum dimensions of 3300 mm x 12000 mm.

Generally, the sheets have thicknesses ranging from 2 mm and 50 mm. It should be noticed that a large sheet of glass with a thickness of 19 mm has a weight of about 1 ton, while a medium-sized sheet weighs about 500 kg.

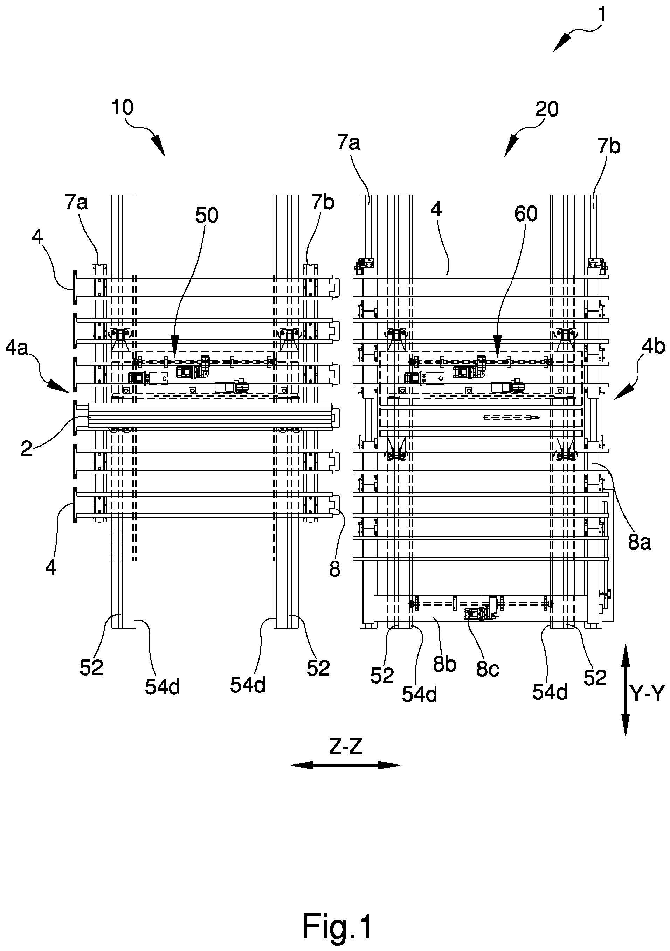

As shown in the example of Figure 1, the sheets 2 are stored on one or more classifiers 10, 20 mainly extended along a longitudinal direction Y-Y and arranged side by side to each other. The classifiers 10, 20 are provided with a plurality of frames 4 arranged on respective seats 4a, 4b suitable for the support of a plurality of sheets 2 of glass or packs of sheets 3 composed of several sheets 2 of glass.

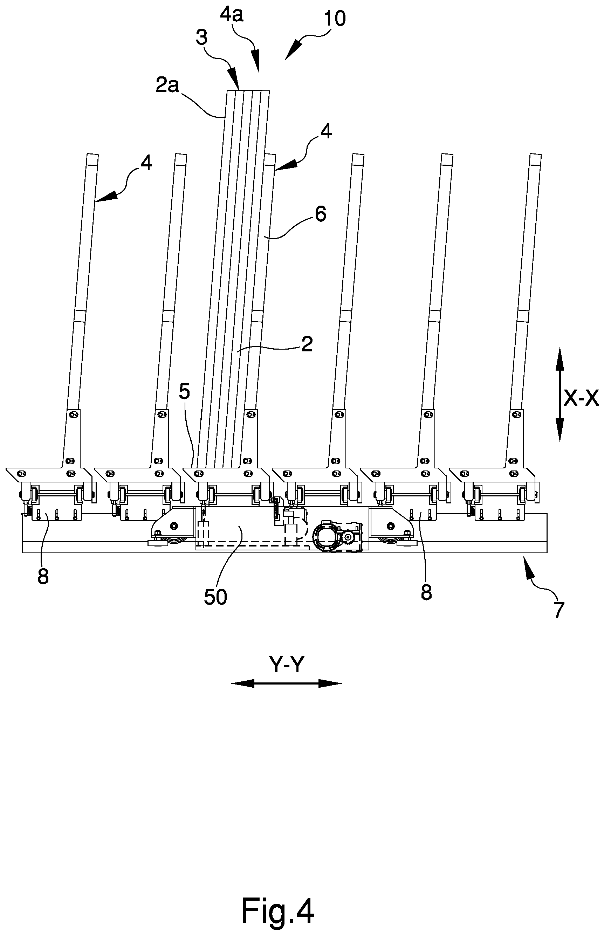

As shown in the example in Figure 4, the frame 4 comprises a horizontal holding base 5 of the sheets 2 or of the packs 3 and a backrest 6 oriented substantially perpendicular to the holding base 5 wherein a sloping supporting side 6a of said sheets 2 and/or of the packs 3 is identified. In the pack 3 supported by the frame 4 a first sheet 2a is identified, positioned more externally than the other sheets 2 of glass. The first outermost sheet 2a defines the front side of the pack 3. Generally, a pack of sheets 3 can comprise a number of sheets 2 proportional to the thickness of the frame 4. Preferably, with a frame 4 with a holding base 40 cm thick, up to ten sheets each 40 mm thick can be stored.

The classifier 10 is preferably a classifier of the fixed type.

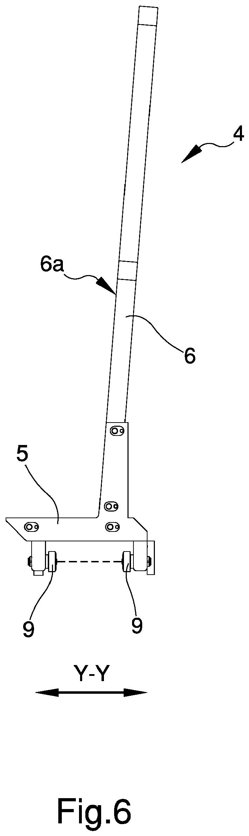

In detail, with reference to the examples shown in Figures 4 to 6, the fixed classifier 10 comprises a base framework 7 standing or fixed to the ground and oriented horizontally, i.e. substantially parallel to the ground, and from which the frames 4 rise substantially vertically along the vertical direction X-X. In the version shown, preferably, the frames 4 are slightly inclined with respect to the vertical, for example by about 5°. The base framework 7 consists of two parallel bars 7a, 7b, separated by a predetermined distance and extending in the direction of the length thereof along a longitudinal direction Y-Y.

Advantageously, with reference to the examples shown in Figures 1 to 6, each frame 4 slides along Z-Z on guides 8 fixed transversely and at the top between two bars 7a, 7b. In particular, the two bars 7a, 7b act as a support for all transverse guides 8 of the fixed classifier 10. Below the holding base 5 of the frame 4, a pair of combined bearings 9 is mounted coaxial with the rotation axis along the Y-Y direction. Preferably, each transverse guide 8 bears a pair of rails 8' in the form of a "C" and each comprising a housing for the combined bearings 9. Usefully, the combined bearings 9 are intended to couple up with the transverse rails 8' in such a way that the frame 4 can slide along the transverse direction Z-Z (as shown in Figure 1).

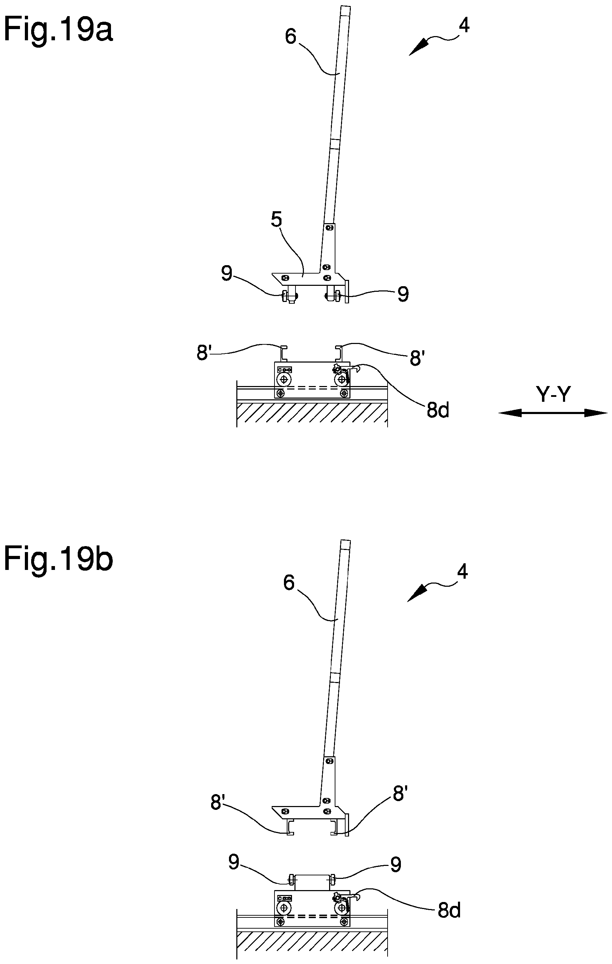

The rails 8' are preferably oriented back to back and separated from each other by a predefined distance to receive the sliding frame 4. Obviously, for an expert in the field it will be clear that other types of guides may also be present in the classifiers (both fixed and mobile) for the purpose of making the frames 4 slide transversely. For example, as shown in the example in Figure 19a, each transverse guide 8 can comprise a pair of rails 8' oriented with their housings facing each other or, as shown in the example in Figure 19b, the rails 8' can be secured to the frame 4 instead of to the transverse guide 8, at the lower portion turned towards the ground of the holding base 5.

In the illustrated examples, the transverse guides 8 of the fixed classifier 10 are six in number.

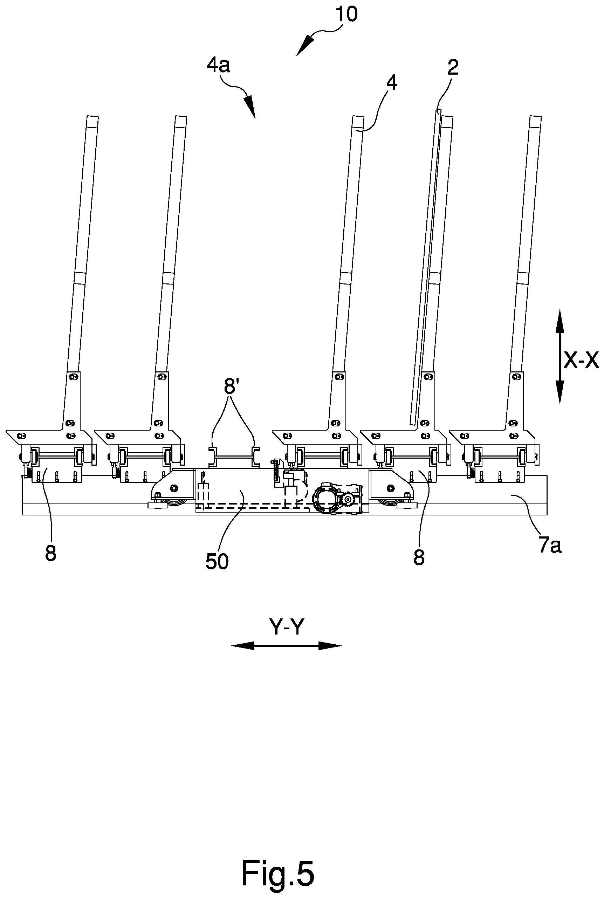

In the example of Figure 5, the fixed classifier 10 of Figure 4 is shown in which a frame 4 is not present in the seat 4a since it is moved towards the adjacent classifier 20.

With reference to the examples shown in the Figures 1 to 3, 6 and 7, a classifier 20 is shown in detail, preferably of the openable type, in accordance with the present invention. In the same way as described with reference to the classifier 10 of the fixed type, the classifier 20 comprises a plurality of frames 4 supporting the sheets 2 which frames are oriented substantially vertically along the vertical direction X-X. However, in the case of the openable classifier 20, the bars 7a, 7b act as rails for several movable transverse guides 8a sliding independently along Y-Y. Each movable transverse guide 8a is in fact mounted on the bars 7a, 7b and can be moved thanks to a transmission system intended for the creation of the seat 4b, adapted to receive the frame 4 from the first fixed classifier 10 as explained in detail below in the rest of the present description.

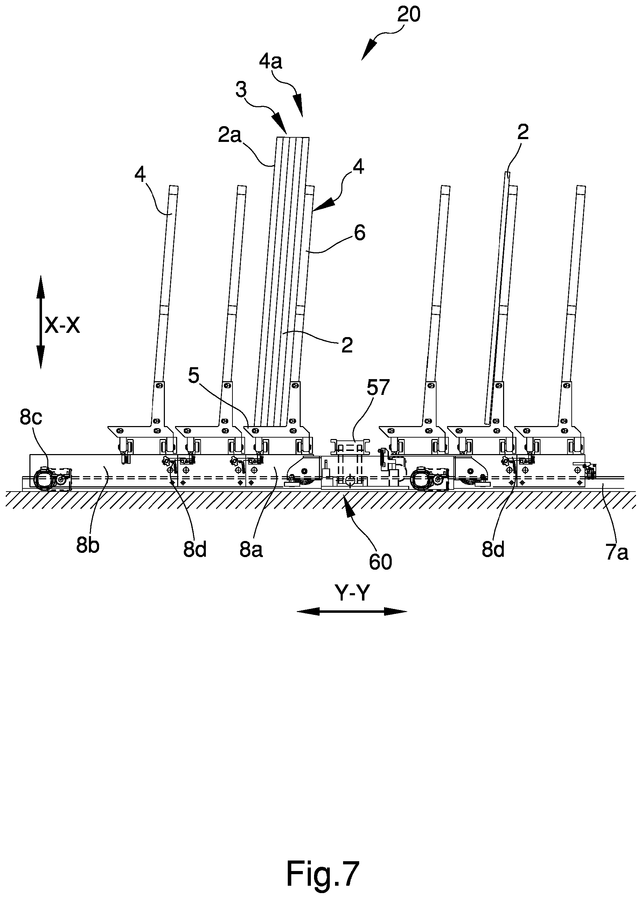

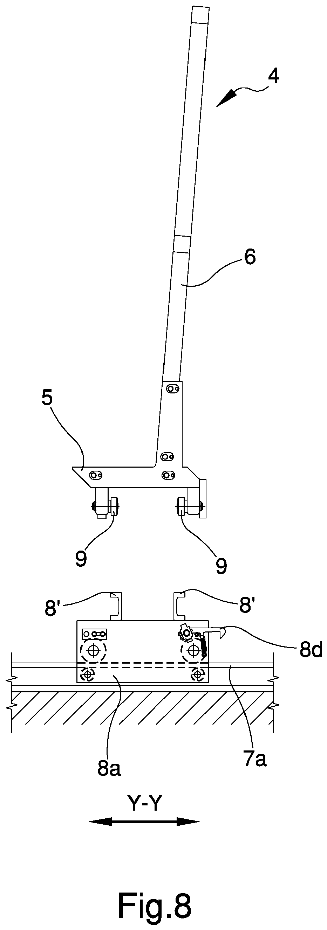

In the openable classifier 20, a head movable transverse guide 8b can be identified, positioned more externally than the other guides 8a. The openable classifier 20 comprises a motorized kinematic rack mechanism 8c mounted on the head movable transverse guide 8b and which allows the head guide 8b to move longitudinally along the bars 7a, 7b in the Y-Y direction. Advantageously, all the guides 8a, 8b are connectable to each other so that they can move together. As can be seen in Figures 7 and 8, the guides 8a, 8b are provided with gripping means 8d which can be engaged with an adjacent guide so that they can be moved, as required, together in a block or separately. In practice, to create the space and therefore the seat 4b between the frames 4 of the openable classifier 20 it is sufficient to activate the release of one of the gripping means 8d to be able to move a group of frames. In the examples shown in the illustrations, in the openable classifier 20 the seat 4b is made after three frames 4 fastened together. In a version not shown, several openings 4b can be provided for in the classifier 20. For this purpose, one or more transverse guides 8 can provide for appropriate motorized kinematic mechanisms to allow the guides to move longitudinally along the bars 7a, 7b.

In order to be able to slide the frames 4 transversely between the fixed classifier 10 and the openable classifier 20, each classifier 10,20 advantageously comprises its own selector carriage 50, 60 sliding below the frames 4 and movable along the longitudinal direction Y-Y to engage the frames 4 and move them transversely towards an adjacent classifier.

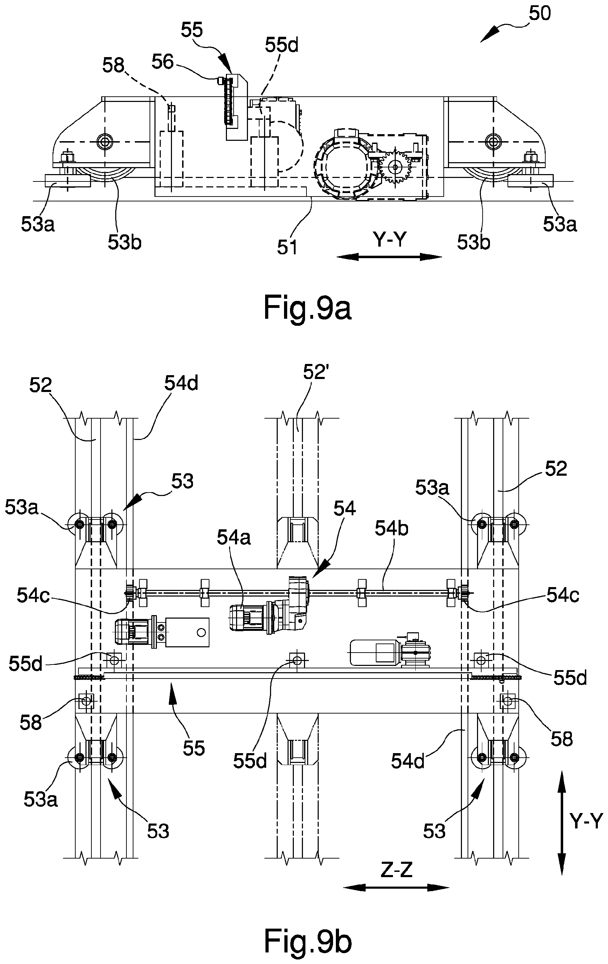

With reference to the example shown in Figures 9a and 9b, the selector carriage 50 is indicated and installed below the fixed classifier 10 which comprises a base structure 51 on which several elements are installed intended for the relevant movements of the selector carriage 50 and explained in detail in the rest of the present description.

As has been said, the selector carriage 50 can slide below the frames 4 of the classifiers 10, 20 along the Y-Y longitudinal direction. For this purpose, a pair of rails 52 fixed onto the ground operates as a guide for the carriage 50 thanks to the coupling with respective movement assemblies 53. In one version, the presence is envisaged of a further central rail 52'. The movement assemblies 53 are supported by the base structure 51 and each is preferably arranged substantially at the vertices of the latter.

The movement assemblies 53 each comprise two wheels 53a, preferably idle and rotatable around parallel vertical axles along the X-X direction. Usefully, the wheels 53a of each movement assembly 53 are separated from each other by a predetermined distance to operate in conjunction with the rail 52 positioned between these. The movement assemblies 53 also comprise supporting rollers 53b, preferably idle, which can be rotated on rails 52 around horizontal and parallel axes along the Z-Z transverse direction. As shown in Figure 9a, each supporting roller 53b is arranged between the wheels 53a and is intended to support the weight of the selector carriage 50.

Preferably, the movement assemblies 53 are four in number and can be engaged with each rail 52 two by two to give greater stability to the selector carriage 50 during the Y-Y movement.

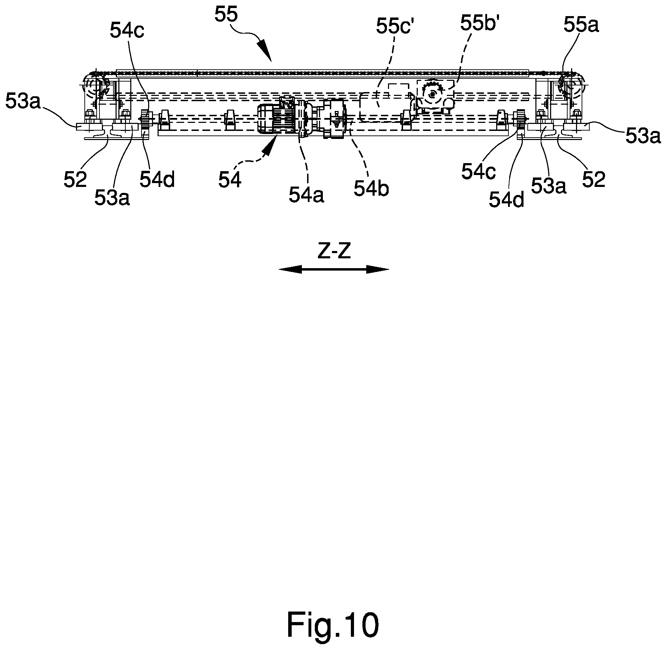

With reference to the examples shown in Figures 9b and 10, the movement of the selector carriage 50 is given by a control assembly 54 provided with a motor 54a operating in conjunction with a shaft 54b at the extremities of which are two pinions 54c intended to engage with respective racks 54d installed on the ground and extending parallel to the rails 52 along Y-Y.

Preferably, the distance comprised between the two bars 7a, 7b of the frame 4 is greater than the distance comprised between the two rails 52 of the selector carriage 50. Preferably, the distance comprised between the two rails 52 of the selector carriage 50 is greater than the distance comprised between the two racks 54d. In accordance with a preferred embodiment, the distance comprised between the bars 7a and 7b is proportional to the size of the sheet to be moved. For example, in the case of movements of medium-sized sheets, the distance between the bars 7a and 7b is approximately 3500 mm.

Advantageously, the selector carriage 50 comprises a drive assembly 55 intended to operate in conjunction with each frame 4 to move it transversely along the Z-Z direction.

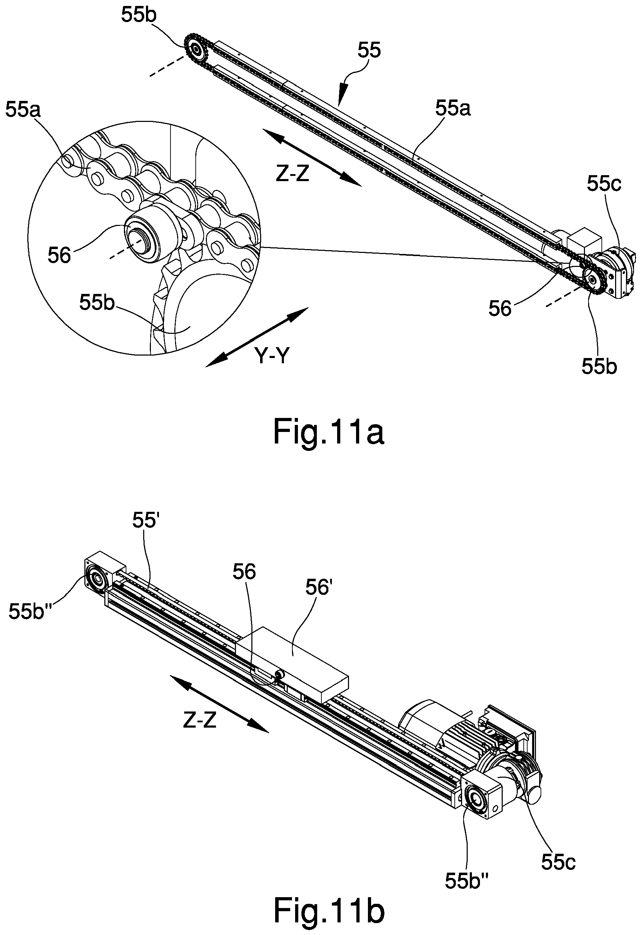

With reference to the example shown in Figures 10 and 11a, the drive assembly 55 is fixed to the base structure 51 and consists of a drive member elongated along the Z-Z direction which comprises a chain 55a closed between two idle gear wheels 55b. The wheels 55b rotate around their own axes parallel to each other and extending along the Y-Y longitudinal direction. Usefully, one of the wheels 55b is locked together with the shaft of a motor 55c so as to set the drive assembly 55 in motion. In an alternative version, the motion to the chain can be given by means of a pinion 55b' placed between the gear wheels 55b and controlled by a motor 55c' (examples in Figures 9b and 10).

As shown in the enlargement of Figure 11a, the chain 55a comprises a driving pin 56 locked together with the chain 55a and projecting from the latter along Y-Y. The driving pin 56 is intended to fit into a first recess 5a of the holding base 5 of the frame 4, as explained in detail below in the rest of the present description.

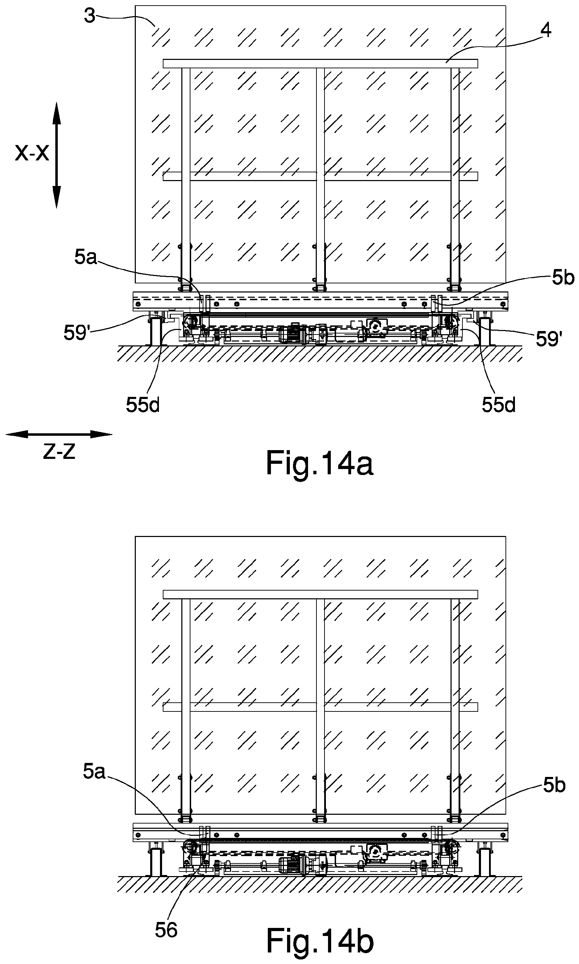

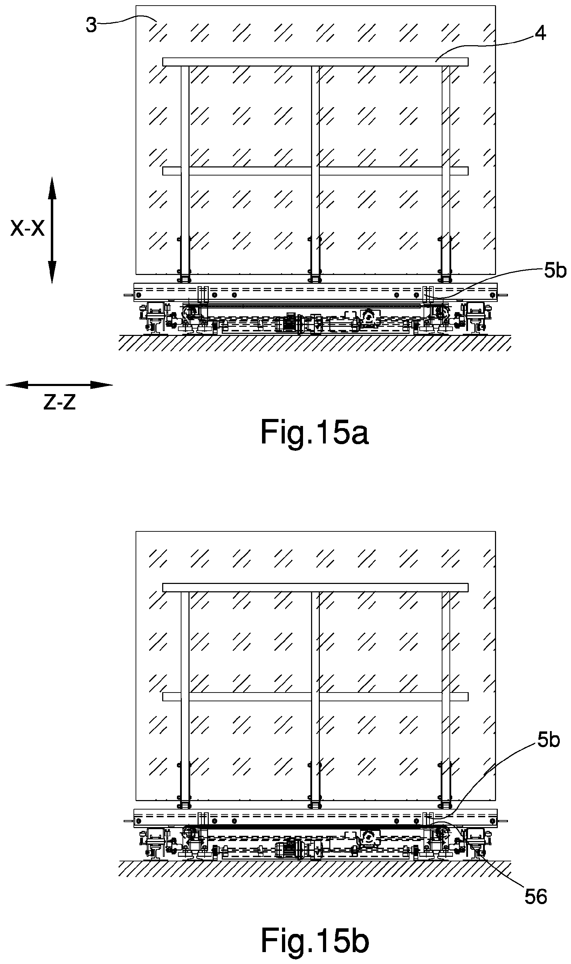

Advantageously, the drive assembly 55 can be raised between a lowered position (or idle configuration) and a raised position (or engagement configuration) wherein in the raised position the driving pin 56 fits into the first recess 5a of the frame 4 (shown in Figures 14a,14b and 15a,15b). For this purpose, the selector carriage 50 comprises at least one actuator 55d intended to operate in conjunction with the drive assembly 55 to lift the latter. Each frame 4 of the classifiers 10,20 comprises a first recess 5a and a second recess 5b intended to receive the driving pin 56 when the drive assembly 55 of the selector carriages 50,60 is in the raised position. This way, the clockwise rotation of the chain 55a enables the frame 4 to shift along the Z-Z direction so that it is transferred between the seat 4a of the fixed classifier 10 to the seat 4b of the openable classifier 20. The recesses 5a,5b are arranged below the base 5 of the frame 4 substantially at the extremal portions of the latter and each can comprise an overturned U-shaped element to receive, by shape coupling, the driving pin 56 of the selector carriages 50,60.

In the embodiment of Figure 11b, the drive assembly 55 provides for the presence of a belt 55' rotatable between two toothed pulleys 55b" driven by a motor 55c'. The belt 55' supports a plate 56' having the function of giving greater stability during the thrust of the frames 4. The driving pin 56 is fixed to the plate 56' and is intended to fit into the first recess 5a of the holding base 5 of the frame 4.

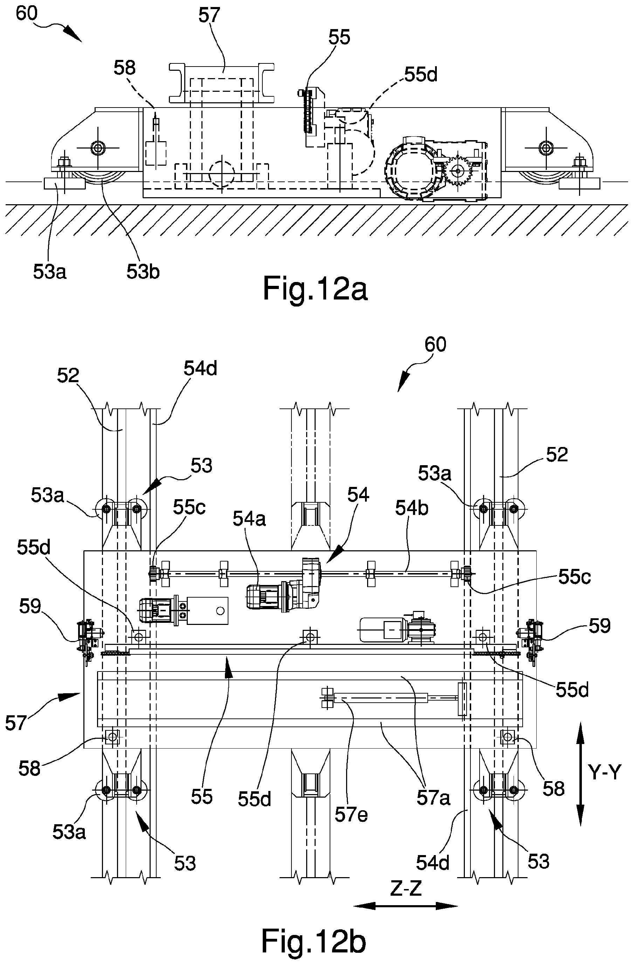

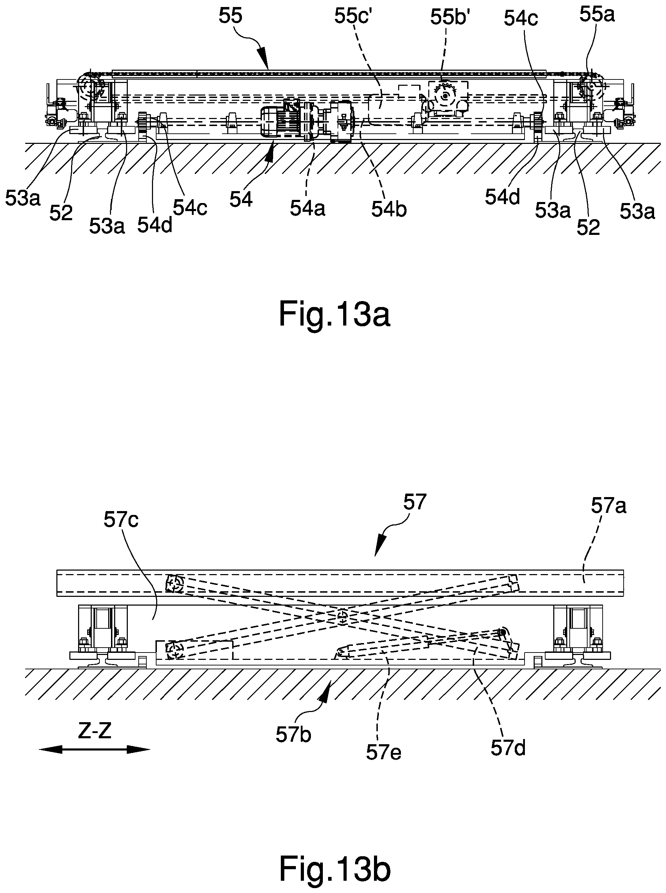

With reference to the example in Figures 12a and 12b, the selector carriage 60 operating in conjunction with the openable classifier 20 is shown in detail in accordance with the present invention. The selector carriage 60 is substantially similar to the selector carriage 50 sliding under the frames 4 of the first classifier 10. Nevertheless, the selector carriage 60 further comprises a transverse guide 57 (also shown in Figure 13b) that can be lifted vertically to fit into the seat 4b of the openable classifier 20 by means of one or more actuators 55d. In this case, the transverse guide 57 of the selector carriage 60 has substantially the same function as the movable transverse guides 8a of the openable classifier 20. In fact, when each frame 4 of the second classifier 20 moves away from an adjacent frame along the Y-Y direction, a space is created identified in the seat 4b intended to receive the frame 4 from the first fixed classifier 10. It follows that the frames 4 of the classifier 20 move to make such seat 4b into which the transverse guide 57 of the selector carriage 60 will fit by lifting. The classifier 20 is thus ready to receive the frame 4 from the adjacent classifier 10.

As shown in the version in Figure 12b, the selector carriage 60 has one or more electric actuators 59 intended to operate in conjunction with the gripping means 8d of the transverse guides 8a in order to make the opening of the openable classifier 20 and therefore the space 4b. In particular, the electric actuators 59 are intended to lift the gripping means 8d so that each frame moves away from an adjacent frame in order to create the seat 4b for the insertion of the frame 4 coming from the adjacent classifier.

As shown in the Figures 9a,9b and 12a,12b, each selector carriage 50,60 comprises one or more safety actuators 55d mounted on the base structure 51 and operating in conjunction with respective locking systems 59' (shown for example in Figure 14a) arranged below the frames 4 of the classifiers. In practice, the actuators 55d are movable from a lowered position to a raised position to engage with the locking systems 59' of the frames 4 so that the latter can be locked in movements along Z-Z to avoid unwanted translations.

Summarizing, advantageously, the selector carriage 60 operating in conjunction with the openable classifier 20 allows making, in a same position:
- the lifting/lowering of the drive assembly 55,
- the lifting/lowering of the transverse guide 57,
- the activation/deactivation of the release of the gripping means 8d so that each frame 4 can move longitudinally,
- the prevention of any undesired transverse movements of the frames 4 when necessary.

With reference to the example in Figures 12b and 13b, the transverse guide 57 of the selector carriage 60 operating in conjunction with the openable classifier 20 is shown in detail. Usefully, the transverse guide 57 comprises a pair of rails 57a oriented back to back along Z-Z and separated from each other by a predefined distance to receive the frame 4 sliding. The rails 57a are locked together and can be moved by means of a hydraulic lifting assembly 57b consisting, preferably, of a lower plate 57c fixed to the selector carriage 60. The rails 57a are secured to the lower plate 57c by means of a linkage 57d which, controlled by a hydraulic piston 57e, enables the transverse guide 57 to lift up and drop down as required.

In order to move the frame 4 between the fixed classifier 10 and the openable classifier 20, the various phases of the method for the storage and movement are listed below, in accordance with the present invention. It should be noticed that each movable device/element of the system 1, such as, e.g., the frames, the selector carriages, the motors, the drive assemblies, the movement assemblies, the liftable guides, etc., are connected to each other by means of appropriate wiring through, for example, a power and communication network (can-bus type). The communication network can be connected to appropriate software processing means (e.g. PLCs) not shown and intended to receive information on the position of all the parts in order to control their movements in a synchronized manner.

With reference to the example shown in Figure 1, in a first phase, the classifier 10 is loaded with a plurality of sheets 2 or packs of sheets 3 stored on one or more frames 4. In the example shown, the fourth frame 4 (starting from the top with reference to the direction of display in Figure 1) of the fixed classifier 10 supports a pack of sheets 3.

By means of appropriate software control, the selector carriage 50 is positioned below the frame 4 bearing the pack of sheets 3 by means of the activation of the control assembly 54. The lifting actuator 55d is then activated to allow the drive assembly 55 to lift up so that the driving pin 56 fits into the first recess 5a of the selected frame 4 of the fixed classifier 10.

Optionally, a phase is envisaged wherein the openable classifier 20 moves the frames 4 thereof to create the seat 4b intended to receive the frame 4 of the fixed classifier 10. In this case, if the seat 4b is not aligned with the position of the frame 4 to be moved of the fixed classifier 10, the kinematic rack mechanism 8c is activated to move only the frames needed, in the example in the illustration the first two frames 4 (starting from the bottom with reference to the direction of display of Figure 1), by means of the selector carriage 60 in order to create the seat 4b.

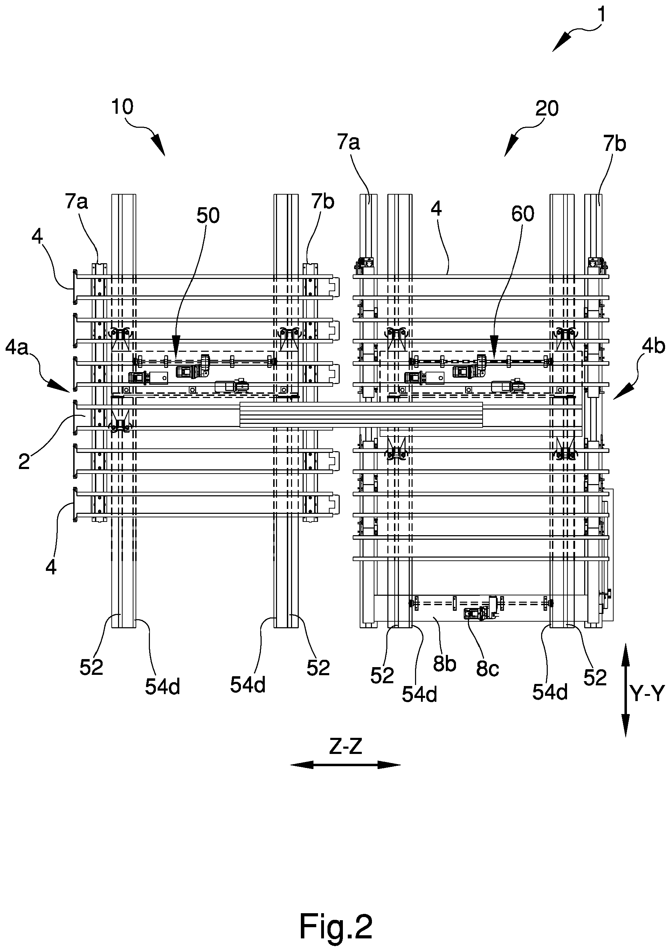

The activation of the motor 55c of the selector carriage 50 moves the chain 55a so that the selected frame 4 of the fixed classifier 10 starts to move towards the seat 4b of the openable classifier 20 as shown in Figure 2.

The lifting actuator 55d of the selector carriage 60, located below the openable classifier 20, is activated to allow the drive assembly 55 to lift up so that the driving pin 56 fits into the second recess 5b of the frame 4 moving towards the second openable classifier 20.

The transverse guide 57 thus lifted up enables the rails 57a of the selector carriage 60 to be aligned with the rails 8' of the fixed classifier 10. This way, the wheels 9 of the frame 4 can fit into the rails 57a of the transverse guide 57 of the selector carriage 60 to slide towards the openable classifier 20.

Preferably, the chains 55a of the selector carriages 50,60 operate simultaneously on the frame 4 for a predefined period of time, particularly when the frame 4 is in a position comprised between the fixed classifier 10 and the openable classifier 20.

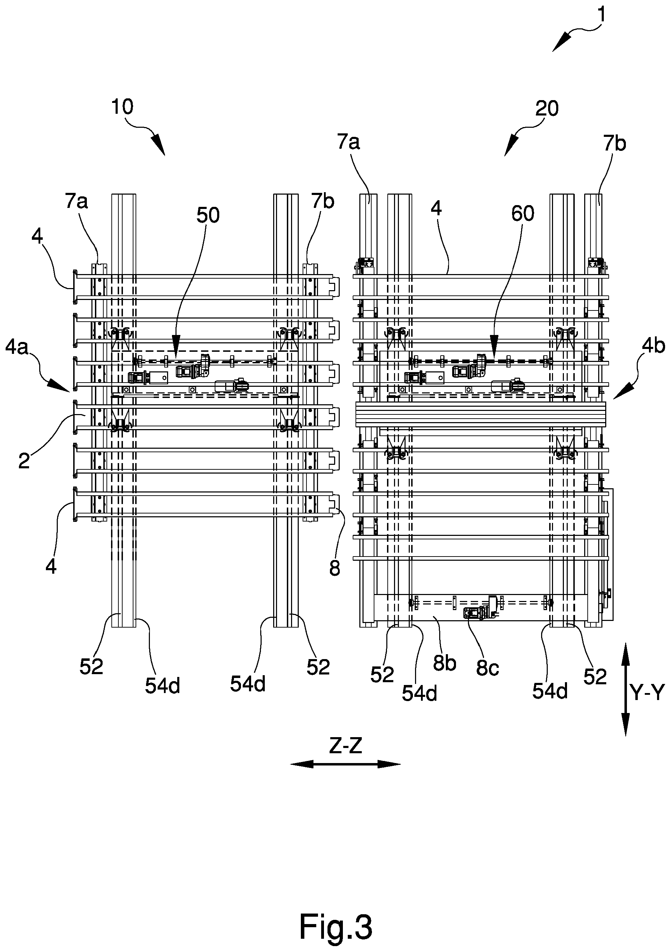

Finally, as shown in the example in Figure 3, the motor 55c of the selector carriage 60 is deactivated when the frame 4 is completely housed in the seat 4b of the openable classifier 20. In order to block the movement of the frame 4 on the openable classifier 20, the activation phase of the actuators 55d is provided so that the locking systems 59' prevent movements along Z-Z to the frame 4.

It should be noticed that the handling system 1 in accordance with the present invention is potentially able to count on an infinite number of openable classifiers positioned side by side. There may therefore be multiple configurations in the arrangement of the fixed, openable classifiers and of the shuttle.

For example, preferably at least one openable classifier is arranged between a fixed classifier and a shuttle.

In a version not shown, several openable classifiers are arranged between a fixed classifier and a shuttle.

In a further version not shown, one shuttle is arranged between several openable classifiers.

In a further version, the (fixed or openable) classifiers are arranged between two shuttles.

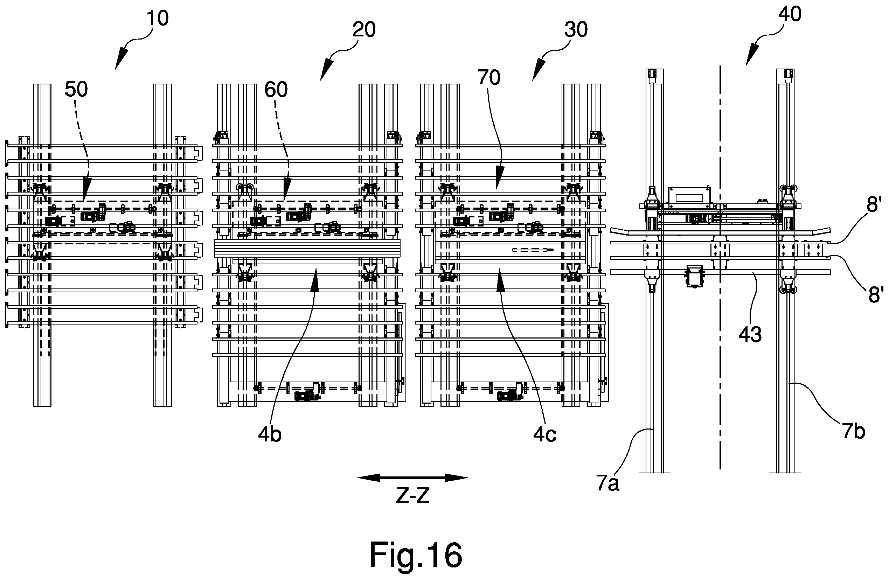

In the second embodiment shown in the example in Figure 16, the system 1 comprises a fixed classifier 10, a first openable classifier 20 and a second openable classifier 30 and a shuttle 40 arranged side by side along the Z-Z transverse direction. In particular, the first openable classifier 20 is arranged between the fixed classifier 10 and the second openable classifier 30, and the second openable classifier 30 is arranged between the first openable classifier 20 and the shuttle 40.

The operation of the fixed classifier 10 and of the first openable classifier 20 is similar to what is described with reference to Figures 1-3.

At the end of the phase wherein the frame 4 is completely housed in the seat 4b of the first openable classifier 20 and wherein the selector carriage 60 is positioned below the frame 4, it is possible to further shift the frame 4 towards the second openable classifier 30.

Optionally, a phase is provided wherein the second openable classifier 30 moves its frames 4 to create the seat 4c intended to receive the frame 4. In the case in point, if the seat 4c is not aligned with the position of the frame 4 to be moved, the kinematic rack mechanism 8c is activated to move only the necessary frames, in the example in the illustration the first two frames 4 (starting from the bottom with reference to the direction of display of Figure 16), by means of the selector carriage 70 in order to create the seat 4c.

The lifting motor of the selector carriage 70, located below the second openable classifier 30, is activated to allow the drive assembly 55 and the transverse guide 57 to lift up so that the driving pin 56 fits into the second recess 5b of the moving frame 4 and the wheels 9 of the frame 4 fit into the rails 57a of the transverse guide 57 of the selector carriage 70. For this purpose, it should be specified that the selector carriage 60 and the selector carriage 70 are substantially identical.

The activation of the motor 55c of the selector carriage 60 moves the chain 55a so that the selected frame 4 starts to move from the seat 4b of the first openable classifier 20 towards the seat 4c of the second openable classifier 30 as shown in Figure 16.

Preferably, the chains 55a of the selector carriages 60,70 operate on the frame 4 simultaneously for a predefined period of time, especially when the frame 4 is in a position comprised between the first openable classifier 20 and the second openable classifier 30.

The frame 4 is thus shifted from the second openable classifier 30 towards the shuttle 40 thanks to the operation of the selector carriage 70 in conjunction with the drive assembly 55 arranged below the shuttle 40.

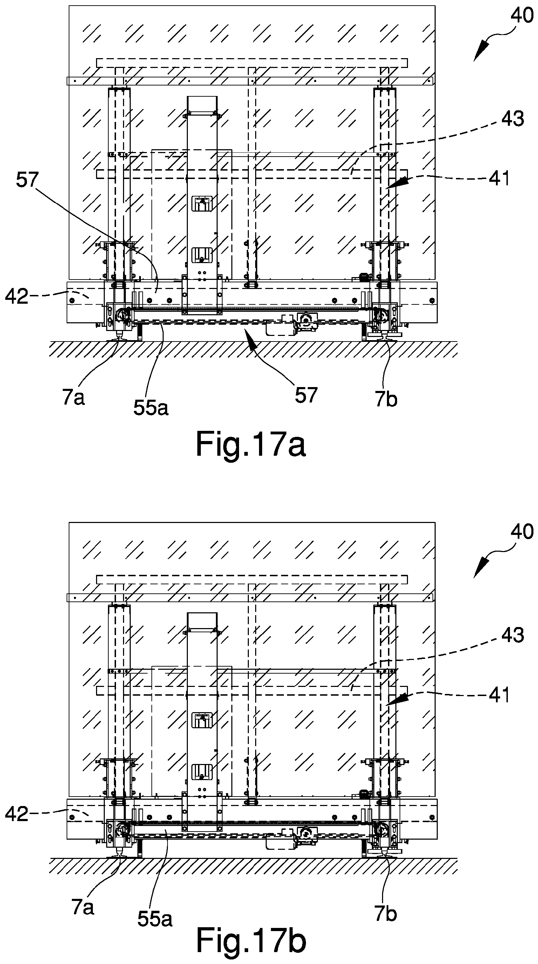

With reference to the example shown in Figures 16, 17a and 17b, the shuttle 40 comprises a base structure 41 operating as a seat for the frame 4 and its own drive assembly 57 substantially similar to the drive assembly 55 installed on the selector carriage 50 of the fixed classifier 10. The drive assembly 57 is arranged below the base structure 41 and is locked together it. The base structure 41 comprises a horizontal holding base 42 for holding the sheets 2 or the packs 3 and a backrest 43 oriented substantially perpendicular to the holding base 42 wherein an inclined supporting side is identified for supporting the above-mentioned sheets 2 and/or packs 3. Usefully, the base structure 41 is sliding longitudinally along Y-Y on bars 7a,7b installed on the ground and has for this purpose a pair of rails 8' fixed to the holding base 42 and separated from each other by a predefined distance to receive sliding the frame 4 from the second openable classifier 30.

When the frame 4 has to leave the seat 4c of the second openable classifier 30, the shuttle 40 aligns with the transverse guides 57 of the selector carriage 70. The activation of the motor 55c of the selector carriage 70 moves the chain 55a so that the selected frame 4 starts to move from the seat 4c of the second openable classifier 30 towards the holder of the frame 41 of the shuttle 40. Preferably, the chains 55a of the selector carriage 70 and of the drive assembly 57 of the shuttle operate simultaneously for a predefined period of time on the frame 4, particularly when the frame 4 is in a position comprised between the second openable classifier 30 and the shuttle 40.

It is clear that the shuttle 40 can be positioned alongside any type of fixed or openable classifier. In a preferred embodiment not shown, the shuttle 40 can be arranged next to the fixed classifier 10 or the openable classifier 20 or, for example, positioned between them.

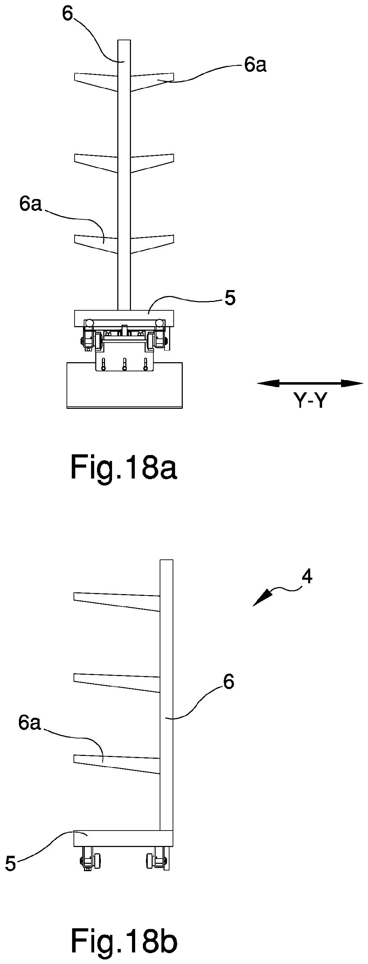

With reference to the example shown in Figures 18a and 18b, possible variants are indicated of the frame 4 installable in the classifiers 10,20,30 of the system according to the present invention. In particular, said variants allow the horizontal storage of heavy material, such as, e.g., profiled bars on platforms 6a fixed to the vertical backrest 6. This way, advantageously, it will be potentially possible to store material of any kind, comprising not sheet-shaped.

As it has been possible to determine from the present description, it has been ascertained that the described invention achieves the intended objects and in particular the fact is underlined that through the automated system for the storage and the movement of heavy materials it is possible, in the most simplified form, to permit the installation of a single shuttle between multiple classifiers.

Moreover, thanks to the special cooperation between the classifiers, the storage capacity is considerably increased, available space being equal. Furthermore, by means of the use of suitable computerized means, e.g., PLC, CNC (numerical control), SCADA and relative sensors (by means of encoders) it is possible to set all the movements and storage of the materials in an automated way, making the system work even without the presence of qualified personnel. The embodiments of the system described above are potentially infinite and obviously an expert in the field, in order to satisfy contingent and specific needs, will be able to make numerous modifications and variations, all of which nevertheless contained within the scope of protection of the invention, as defined by the following claims.

## Claims

1. Automated system (1) for the storage and movement of heavy material (2) comprising:
a first (10) and a second classifier (20) mainly extended along a longitudinal direction (Y-Y) and side by side to each other, wherein each classifier (10, 20) comprises a respective group of frames (4) arranged in as many seats (4a, 4b) for the support of said heavy material (2), wherein said first classifier (10) comprises a selector carriage (50) sliding below its own group of frames (4) and movable along said longitudinal direction (Y-Y), wherein said selector carriage (50) of said first classifier (10) is engageable with a single frame (4) selected from the group of frames of said first classifier (10) in order to shift it along an orthogonal direction (Z-Z) with respect to said longitudinal direction (Y-Y) and transfer it from the seat (4a) of said first classifier (10) to the seat (4b) of said second classifier (20), the automated system (1) being **characterized in that** each frame (4) of said second classifier (20) can be moved away from an adjacent frame along said longitudinal direction (Y-Y) so as to create a space for the creation of said seat (4b) intended to receive said frame (4) from said first classifier (10), wherein said second classifier (20) comprises its own selector carriage (60) sliding below its own group of frames (4) and movable along said longitudinal direction (Y-Y), wherein said selector carriage (60) of said second classifier (20) is engageable with said frame (4) to grasp it and transfer it from the seat (4a) of said first classifier (10) to the seat (4b) of said second classifier (20), and wherein the selector carriages (50, 60) of said first (10) and second classifier (20) engage said frame (4) at the same time.

2. System (1) according to the preceding claim, comprising a third classifier (30) positioned alongside said second classifier (20) and comprising a group of frames (4) arranged in as many seats (4c) for the support of said heavy material (2), wherein each frame (4) of said third classifier (30) is movable away from an adjacent frame (4) along said longitudinal direction (Y-Y) so as to create a space for the creation of a seat (4c) intended to receive said frame (4) from said second classifier (20).

3. System (1) according to claim 2, wherein said third classifier (30) comprises its own selector carriage (70) sliding below the group of frames (4) of said third classifier (30) and movable along said longitudinal direction (Y-Y).

4. System (1) according to claim 3, wherein said selector carriage (70) is engageable with said frame (4) to grasp it and transfer it from the seat (4b) of said second classifier (20) to the seat (4c) of said third classifier (30).

5. System (1) according to any one of claims from 1 to 4, comprising a shuttle (40) positioned alongside said second classifier (20) or said third classifier (30) and comprising a frame (4) movable along said longitudinal direction (Y-Y) and positionable close to the seat (4b, 4c) of said second classifier (20) or third classifier (30) to receive said frame (4) from said second classifier (20) or third classifier (30).

6. System (1) according to claim 5, wherein said shuttle (40) comprises a drive assembly (57) engageable with said frame (4) to grasp it and transfer it from the seat (4c) of said third classifier (30) to the frame (41) of said shuttle (40).

7. Automated method for the storage and movement of heavy material (2) comprising the phases of:
providing a first (10) and a second classifier (20) mainly extended along a longitudinal direction (Y-Y) and side by side with each other and loaded with said heavy material (2) stored on one or more frames (4),
providing a first selector carriage (50) positionable below said frame (4) of said first classifier (10) carrying the heavy material (2), the automated method being **characterized in that** it is comprising the phases of :
providing a second selector carriage (60) positionable below said second classifier (10),
lifting said selector carriage (50) to allow the latter to engage said frame (4) of said classifier (10),
activating said selector carriage (50) to shift the frame (4) towards said second classifier (20),
aligning said second selector carriage (60) to said first selector carriage (50) in order to receive said frame (4) from said first classifier (10) to said second classifier (20).

## Patentansprüche

1. Automatisiertes System (1) für die Lagerung und den Transport von schwerem Material (2), umfassend:
einen ersten (10) und einen zweiten Klassifizierer (20), die sich hauptsächlich entlang einer Längsrichtung (Y-Y) und Seite an Seite zueinander erstrecken, wobei jeder Klassifizierer (10, 20) eine jeweilige Gruppe von Rahmen (4) umfasst, die in ebenso vielen Sitzen (4a, 4b) zum Tragen des schweren Materials (2) angeordnet sind,
wobei der erste Klassifizierer (10) einen Auswahlschlitten (50) umfasst, der unter seiner eigenen Gruppe von Rahmen (4) gleitet und entlang der Längsrichtung (Y-Y) beweglich ist,
wobei der Auswahlschlitten (50) des ersten Klassifizierers (10) mit einem einzelnen Rahmen (4) in Eingriff gebracht werden kann, der aus der Gruppe von Rahmen des ersten Klassifizierers (10) ausgewählt ist, um ihn entlang einer orthogonalen Richtung (Z-Z) in Bezug auf die Längsrichtung (Y-Y) zu verschieben und ihn von dem Sitz (4a) des ersten Klassifizierers (10) zu dem Sitz (4b) des zweiten Klassifizierers (20) zu überführen,
das automatisierte System (1) **dadurch gekennzeichnet ist, dass**
jeder Rahmen (4) des zweiten Klassifizierers (20) entlang der Längsrichtung (Y-Y) von einem benachbarten Rahmen wegbewegt werden kann, um einen Raum zur Bildung des Sitzes (4b) zu schaffen, der dazu bestimmt ist, den Rahmen (4) von dem ersten Klassifizierer (10) aufzunehmen,
wobei der zweite Klassifizierer (20) seinen eigenen Auswahlschlitten (60) umfasst, der unter seiner eigenen Gruppe von Rahmen (4) gleitet und entlang der Längsrichtung (Y-Y) beweglich ist,
wobei der Auswahlschlitten (60) des zweiten Klassifizierers (20) mit dem Rahmen (4) in Eingriff gebracht werden kann, um ihn zu ergreifen und ihn von dem Sitz (4a) des ersten Klassifizierers (10) zu dem Sitz (4b) des zweiten Klassifizierers (20) zu überführen, und
wobei die Auswahlschlitten (50, 60) des ersten (10) und zweiten Klassifizierers (20) gleichzeitig mit dem Rahmen (4) in Eingriff treten.

2. System (1) nach dem vorhergehenden Anspruch, das einen dritten Klassifizierer (30) umfasst, der neben dem zweiten Klassifizierer (20) angeordnet ist und eine Gruppe von Rahmen (4) umfasst, die zum Tragen des schweren Materials (2) in ebenso vielen Sitzen (4c) angeordnet sind, wobei jeder Rahmen (4) des dritten Klassifizierers (30) entlang der Längsrichtung (Y-Y) von einem benachbarten Rahmen (4) wegbewegt werden kann, um einen Raum zur Bildung eines Sitzes (4c) zu schaffen, der vorgesehen ist, den Rahmen (4) von dem zweiten Klassifizierer (20) entgegenzunehmen.

3. System (1) nach Anspruch 2, wobei der dritte Klassifizierer (30) seinen eigenen Auswahlschlitten (70) umfasst, der unter der Gruppe von Rahmen (4) des dritten Klassifizierers (30) gleitet und entlang der Längsrichtung (Y-Y) beweglich ist.

4. System (1) nach Anspruch 3, wobei der Auswahlschlitten (70) mit dem Rahmen (4) in Eingriff gebracht werden kann, um ihn zu ergreifen und ihn von dem Sitz (4b) des zweiten Klassifizierers (20) zu dem Sitz (4c) des dritten Klassifizierers (30) zu überführen.

5. System (1) nach einem der Ansprüche 1 bis 4, mit einem Shuttle (40), das neben dem zweiten Klassifizierer (20) oder dem dritten Klassifizierer (30) angeordnet ist und einen Rahmen (4) umfasst, der entlang der Längsrichtung (Y-Y) beweglich ist und in der Nähe des Sitzes (4b, 4c) des zweiten Klassifizierers (20) oder des dritten Klassifizierers (30) angeordnet werden kann, um den Rahmen (4) von dem zweiten Klassifizierer (20) oder von dem dritten Klassifizierer (30) entgegenzunehmen.

6. System (1) nach Anspruch 5, wobei das Shuttle (40) eine Antriebseinheit (57) umfasst, die mit dem Rahmen (4) in Eingriff treten kann, um ihn zu ergreifen und ihn vom Sitz (4c) des dritten Klassifizierers (30) zu dem Rahmen (41) des Shuttles (40) zu überführen.

7. Automatisiertes Verfahren für die Lagerung und den Transport von schwerem Material (2), das die folgenden Phasen umfasst:
Bereitstellen eines ersten (10) und eines zweiten Klassifizierers (20), die sich hauptsächlich entlang einer Längsrichtung (Y-Y) und Seite an Seite erstrecken und die mit dem schweren Material (2) beladen sind, das auf einem oder mehreren Rahmen (4) gelagert ist,
Bereitstellen eines ersten Auswahlschlittens (50), der unter dem Rahmen (4) des ersten Klassifizierers (10) angeordnet werden kann und der das schwere Material (2) trägt,
wobei das automatisierte Verfahren **dadurch gekennzeichnet ist, dass** es die folgenden Phasen umfasst:
Bereitstellen eines zweiten Auswahlschlittens (60), der unterhalb des zweiten Klassifizierers (10) angeordnet werden kann,
Anheben des Auswahlschlittens (50), damit dieser mit dem Rahmen (4) des Klassifizierers (10) in Eingriff treten kann,
Aktivieren des Auswahlschlittens (50), um den Rahmen (4) in Richtung des zweiten Klassifizierers (20) zu verschieben,
Ausrichten des zweiten Auswahlschlittens (60) in Bezug auf den ersten Auswahlschlitten (50), um an dem zweiten Klassifizierer (20) den Rahmen (4) von dem ersten Klassifizierer (10) entgegenzunehmen.

## Revendications

1. - Système automatisé (1) pour le stockage et le déplacement de matériel lourd (2), comprenant :
des premier (10) et deuxième classificateurs (20) s'étendant principalement le long d'une direction longitudinale (Y-Y) et côte à côte, chaque classificateur (10, 20) comprenant un groupe respectif de cadres (4) disposés en autant de sièges (4a, 4b) pour le support dudit matériau lourd (2),
ledit premier classificateur (10) comprenant un chariot sélecteur (50) coulissant au-dessous de son propre groupe de cadres (4) et mobile le long de ladite direction longitudinale (Y-Y),
ledit chariot sélecteur (50) dudit premier classificateur (10) étant apte à être engagé avec un seul cadre (4) choisi parmi le groupe de cadres dudit premier classificateur (10) afin de le déplacer le long d'une direction orthogonale (Z-Z) par rapport à ladite direction longitudinale (Y-Y) et le transférer du siège (4a) dudit premier classificateur (10) jusqu'au siège (4b) dudit deuxième classificateur (20),
le système automatisé (1) étant **caractérisé par le fait que** chaque cadre (4) dudit deuxième classificateur (20) peut être éloigné d'un cadre adjacent le long de ladite direction longitudinale (Y-Y) de façon à créer un espace pour la création dudit siège (4b) destiné à recevoir ledit cadre (4) provenant dudit premier classificateur (10), ledit deuxième classificateur (20) comprenant son propre chariot sélecteur (60) coulissant au-dessous de son propre groupe de cadres (4) et mobile le long de ladite direction longitudinale (Y-Y),
ledit chariot sélecteur (60) dudit deuxième classificateur (20) étant apte à être engagé avec ledit cadre (4) pour le saisir et le transférer du siège (4a) dudit premier classificateur (10) au siège (4b) dudit deuxième classificateur (20), et les chariots sélecteurs (50, 60) desdits premier (10) et deuxième classificateurs (20) engageant ledit cadre (4) en même temps.

2. - Système (1) selon la revendication précédente, comprenant un troisième classificateur (30) positionné à côté dudit deuxième classificateur (20) et comprenant un groupe de cadres (4) disposés en autant de sièges (4c) pour le support dudit matériau lourd (2), chaque cadre (4) dudit troisième classificateur (30) étant mobile à l'opposé d'un cadre adjacent (4) le long de ladite direction longitudinale (Y-Y) de façon à créer un espace pour la création d'un siège (4c) destiné à recevoir ledit cadre (4) provenant dudit deuxième classificateur (20).

3. - Système (1) selon la revendication 2, dans lequel ledit troisième classificateur (30) comprend son propre chariot sélecteur (70) coulissant au-dessous du groupe de cadres (4) dudit troisième classificateur (30) et mobile le long de ladite direction longitudinale (Y-Y).

4. - Système (1) selon la revendication 3, dans lequel ledit chariot sélecteur (70) est apte à être engagé avec ledit cadre (4) pour le saisir et le transférer du siège (4b) dudit deuxième classificateur (20) au siège (4c) dudit troisième classificateur (30).

5. - Système (1) selon l'une quelconque des revendications 1 à 4, comprenant une navette (40) positionnée à côté dudit deuxième classificateur (20) ou dudit troisième classificateur (30) et comprenant un cadre (4) mobile le long de ladite direction longitudinale (Y-Y) et apte à être positionné près du siège (4b, 4c) dudit deuxième classificateur (20) ou troisième classificateur (30) pour recevoir ledit cadre (4) provenant dudit deuxième classificateur (20) ou troisième classificateur (30).

6. - Système (1) selon la revendication 5, dans lequel ladite navette (40) comprend un ensemble d'entraînement (57) apte à être engagé avec ledit cadre (4) pour le saisir et le transférer du siège (4c) dudit troisième classificateur (30) au cadre (41) de ladite navette (40).

7. - Procédé automatisé pour le stockage et le déplacement de matériel lourd (2) comprenant les phases :
disposer des premier (10) et deuxième classificateurs (20) s'étendant principalement le long d'une direction longitudinale (Y-Y) et côte à côte, et chargés dudit matériau lourd (2) stocké sur un ou plusieurs cadres (4),
disposer un premier chariot sélecteur (50) apte à être positionné au-dessous dudit cadre (4) dudit premier classificateur (10) transportant le matériau lourd (2),
le procédé automatisé étant **caractérisé par le fait qu'**il comprend les phases :
disposer un second chariot sélecteur (60) apte à être positionné au-dessous dudit deuxième classificateur (10),
lever ledit chariot sélecteur (50) pour permettre à ce dernier d'engager ledit cadre (4) dudit classificateur (10),
activer ledit chariot sélecteur (50) pour déplacer le cadre (4) vers ledit deuxième classificateur (20),
aligner ledit second chariot sélecteur (60) sur le premier chariot sélecteur (50) afin de recevoir ledit cadre (4) provenant dudit premier classificateur (10) audit deuxième classificateur (20).
